# EUROPEAN PATENT APPLICATION

(11) **EP 4 468 467 A1**
(43) Date of publication of application: **27.11.2024**
(21) Application number: 23175104.1
(22) Date of filing: 24.05.2023
(51) Int. Cl.: H01M 50/103, H01M 50/15, H01M 50/209, H01M 50/30

(54) **BATTERY MODULE**

(71) Applicant: VOLVO TRUCK CORPORATION, 405 08 Göteborg (SE)
(72) Inventor: FLORÉN, Carl-Robert, 416 57 GÖTEBORG (SE); SENDIL KUMAR, Radhakrishnan, 418 70 GÖTEBORG (SE); LINDELÖW, Fredrik, 541 94 SKÖVDE (SE); GHOSH, Pramathesh, 417 26 GÖTEBORG (SE)
(74) Representative: Kransell & Wennborg KB

(57) **Abstract**

The present disclosure relates to a battery module (10), the battery module (10) comprising a first cell stack (1) comprising battery cells (2) being stacked in a depth direction (z) of the battery module (10), the battery module (10) furthermore comprising an outer casing (3), the first cell stack (1) being arranged in the outer casing (3), the outer casing (3) comprising a first side wall (3a) and a second side wall (3b), the first and second side walls (3a,3b) of the outer casing (3) being opposing side walls, each of the battery cells (2) comprising a first and a second side wall (2a,2b), a first main wall (2c) and a second main wall (2d), the first side wall (2a) of the respective battery cell (2) facing the first side wall (3a) of the outer casing (3) and the second side wall (2b) of the respective battery cells (2) facing the second side wall (3b) of the outer casing (3), wherein each of the battery cells (2) comprises a first and a second battery terminal (4a,4b), the first and the second battery terminals (4a,4b) being arranged at the first side wall (2a) of the respective battery cells (2) and wherein each of the battery cells (2) comprises a respective gas venting member (5), the gas venting members (5) being arranged at the second side wall (2b) of the respective battery cells (2), the gas venting members (5) providing ventilation from each of the battery cells (2) of the first cell stack (1) through the second side wall (3b) of the outer casing (3).

## Description

### TECHNICAL FIELD

The disclosure relates generally to a battery module comprising a cell stack. In particular aspects, the disclosure relates to a battery module comprising a first and a second cell stack stacked in a height direction, each of the first and the second cell stacks comprising battery cells being stacked in a depth direction of the battery module. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Batteries are becoming a common source of power for providing propulsion for vehicles. Such batteries are often rechargeable batteries and typically include a number of battery modules having a number of battery cells that may be connected in series or in parallel forming a complete battery system for the vehicle.

With trucks, trailers and/commercial vehicles, space within the vehicle frame is typically at a premium because the space typically must support assorted components, such as, by way of example, air tanks, service lines, fuel tanks, fuel and electrical lines, hydraulic lines and systems, drive trains and accessories, and/or the like.

In addition, such vehicles may carry multiple battery modules comprising multiple battery cells arranged in a battery system. It is often needed to vertically stack the battery cells in several layers due to specifics of space available for installation of the battery modules. Each of the battery cells comprises battery terminals for connection to for example CCU-units, busbars, cell spacers, temperature sensors, voltage sensors and thermal insulations.

The battery cells may furthermore comprise gas venting members to allow gases produced during its operation to vent into the atmosphere to avoid rupture of the battery cells. Providing channeling of the gas venting is a complex design with many different parts and the channeling is usually arranged close to the electronics.

Commonly, packaging of the battery pack may be volumetric inefficient, taking up unnecessary amounts of space which could otherwise e.g. be used to store more energy.

### SUMMARY

According to a first aspect of the disclosure a battery module is provided, the battery module comprising a first cell stack comprising battery cells being stacked in a depth direction of the battery module, the battery module furthermore comprising an outer casing, the first cell stack being arranged in the outer casing, the outer casing comprising a first side wall and a second side wall, the first and second side walls of the outer casing being opposing side walls, each of the battery cells comprising a first and a second side wall, a first main wall and a second main wall, the first side wall of the respective battery cell facing the first side wall of the outer casing and the second side wall of the respective battery cells facing the second side wall of the outer casing, wherein each of the battery cells comprises a first and a second battery terminal, the first and the second battery terminals being arranged at the first side wall of the respective battery cells and wherein each of the battery cells comprises a respective gas venting member, the gas venting members being arranged at the second side wall of the respective battery cells, the gas venting members providing ventilation from each of the battery cells of the first cell stack through the second side wall of the outer casing.

The first aspect of the disclosure may seek to provide a battery module with an improved volumetric packaging. Channeling gas venting is a complex design including many different parts which may be space consuming and require adaptation at the arrangement site. The fact that the gas venting members are arranged on an opposite side of the battery cells with respect to the battery terminals may optimize the space consumption of the battery stack within the housing and it simplifies the gas venting. The reduced space consumption of the battery stack may reduce the volume of the housing or could be used to store more energy within the housing. The battery cells according to the present disclosure may be prismatic cells, i.e. a cell whose chemistry is enclosed in a rigid casing. The rectangular shape of the prismatic cells allows for efficient stacking of multiple cells in a cell stack. The gas venting member is a mechanical safety component, conventionally located at the top of a prismatic battery cell or at the same side as the battery terminals. It releases the gases, or the internal pressure built in a battery and ensures the direction of gas release in the case of a thermal runaway event. The second side wall of the outer casing may thus comprise one or more openings, through which the gas may exit.

Optionally in some examples, including in at least one preferred example, the first cell stack faces a thermal control barrier plate.

Optionally in some examples, including in at least one preferred example, the first cell stack may be arranged on, such as on top of, a thermal control barrier plate.

Optionally in some examples, including in at least one preferred example, a thermal control barrier plate may be arranged on top of the first cell stack.

A technical benefit may include that the thermal control barrier may act as a structural member of the battery stack, hence having channels tolerating higher coolant flow rate and reducing pressure drop. The fact that the first cell stack is arranged on top of the thermal control barrier plate or that the thermal control barrier plate is arranged on top of the first cell stack facilitates connection of the gas venting members and the battery terminals to the respective side walls of the battery stack.

Optionally in some examples, including in at least one preferred example, the thermal control barrier plate is a liquid thermal control barrier plate. A technical benefit may include the sharing of an integrated liquid cooling plate into the module structure between two cell stacks.

Optionally in some examples, including in at least one preferred example, each of the gas venting members comprises a respective pressure relief valve. A technical benefit may include an improved control and auto-regulation of the gas venting members.

According to a second aspect of the disclosure a battery module is provided which comprises a battery stack. The battery stack comprises the first cell stack and a second cell stack, the first and second cell stack being stacked in a height direction of the battery module, the first and second cell stacks comprising battery cells being stacked in the depth direction of the battery module, battery stack being arranged in the outer casing, the battery cells of the second cell stack comprises a first and a second side wall, a first main wall and a second main wall, the first side wall of the respective battery cell of the second cell stack facing the first side wall of the outer casing and the second side wall of the respective battery cells of the second cell stack facing the second side wall of the outer casing, wherein each of the battery cells in the second cell stack comprises a first and a second battery terminal, the first and the second battery terminals being arranged at the first side wall of the respective battery cells and wherein each of the battery cells in the second cell stack comprises a respective gas venting member, the gas venting members being arranged at the second side wall of the respective battery cells, the gas venting members providing ventilation from each of the battery cells in the second cell stack through the second side wall of the outer casing.

The second aspect of the disclosure may seek to provide a battery module comprising a battery stack including a first cell stack and a second cell stack being stacked in a height direction and with an improved volumetric packaging. Channeling gas venting is a complex design including many different parts which may be space consuming and require adaptation at the arrangement site. The fact that the gas venting members are arranged on an opposite side of the battery cells with respect to the battery terminals may optimize the space consumption of the battery module within the housing and it simplifies the gas venting. The reduced space consumption of the battery module may reduce the volume of the housing or could be used to store more energy within the housing.

Optionally in some examples, including in at least one preferred example, a thermal control barrier plate is arranged between the first and the second cell stack.

A technical benefit may include that the thermal control barrier may act as a structural member of the battery stack, hence coolant flow channels with a larger diameter, and thus a higher flow may be designed with a reduced pressure drop. A further technical benefit may include that the thermal control barrier is a common thermal control barrier, thus further reducing the number of components of the battery module. The fact that the thermal control barrier is arranged between the first and the second cell stack facilitates connection of the gas venting members and the battery terminals to the respective side walls of the battery stack.

Optionally in some examples, including in at least one preferred example, the thermal control barrier plate is a liquid thermal control barrier plate.

Optionally in some examples, including in at least one preferred example, a layer of thermal interface material is arranged between the thermal control barrier plate and the respective first and second cell stack. A technical benefit may include improved heat transfer between the cell stack and the thermal control barrier plate and improved cooling efficiency due to integration of a shared cooling plate inside the module structure tolerating high flow tolerance.

Optionally in some examples, including in at least one preferred example, each of the gas venting members comprises a respective pressure relief valve. A technical benefit may include an improved control and auto-regulation of the gas venting members.

Optionally in some examples, including in at least one preferred example, each of the gas venting members of the first and/or second cell stack is connected to a respective opening in the outer casing. A technical benefit may include a rapid exit of the gas from the battery cells and out from the housing.

Optionally in some examples, including in at least one preferred example, the first cell stack is a top cell stack, and the second cell stack is a bottom cell stack.

According to a third aspect of the disclosure an electrical propulsion system is provided, the electrical propulsion system comprising an electric motor and a battery module according to the first or the second aspect, wherein the electric motor is configured to receive power from the battery module.

According to a fourth aspect of the disclosure a vehicle is provided comprising a battery module according to the first or the second aspect or an electrical propulsion system according to the third aspect.

According to a fifth aspect of the disclosure a stationary storing system comprising a battery module according to the first or the second aspect is provided.

According to a sixth aspect of the disclosure a marine vessel comprising a battery module according to the first or the second aspect is provided.

The battery module may thus be used in various applications, such as busses, trucks, construction equipment, marine vessels and/or industrial equipment's and the present disclosure relates to each of these applications comprising a battery module according to the present disclosure.

Optionally in some examples for the battery module according to the first aspect, including in at least one preferred example, a layer of thermal interface material is arranged between the thermal control barrier plate and the first cell stack. A technical benefit may include improved heat transfer between the cell stack and the thermal control barrier plate and improved cooling efficiency due to integration of a shared cooling plate inside the module structure tolerating high flow tolerance.

Optionally in some examples for the battery module according to the first aspect, including in at least one preferred example, each of the gas venting members of the first cell stack is connected to a respective opening in the outer casing. A technical benefit may include a rapid exit of the gas from the battery cells and out from the housing.

Optionally in some examples for the battery module according to the first aspect, including in at least one preferred example, the first side wall of the outer casing is a removable side wall. A technical benefit may include improved aftermarket accessibility to the battery stacks.

Optionally in some examples for the battery module according to the second aspect, including in at least one preferred example, the first side wall of the outer casing is a removable side wall common for the first and the second cell stack. A technical benefit may include improved aftermarket accessibility to the battery stacks and facilitated remanufacturing.

Optionally in some examples for the battery module according to the first or the second aspect, including in at least one preferred example, structural adhesive or semi-structural adhesive is provided on a top side of the first cell stack.

Optionally in some examples for the battery module according to the first aspect, including in at least one preferred example, structural adhesive or semi-structural adhesive is provided on a bottom side of the first cell stack.

Optionally in some examples for the battery module according to the second aspect, including in at least one preferred example, structural adhesive or semi-structural adhesive is provided on a bottom side of the second cell stack.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a side view of an exemplary vehicle comprising a battery module, according to an example.
**FIG. 2** is a cross sectional view of an exemplary battery module, according to an example.
**FIG. 3a** is a side view of an exemplary battery module, according to an example.
**FIG. 3b** is another side view of the exemplary battery module shown in Fig. 3a, according to an example.

### DETAILED DESCRIPTION

The detailed description set forth below provides information and examples of the disclosed technology with sufficient detail to enable those skilled in the art to practice the disclosure.

The present disclosure relates to battery modules suitable for use in busses, trucks, construction equipment, marine vessels and/or industrial equipment's for example. With trucks, trailers and/commercial vehicles, space within the vehicle frame is typically at a premium because the space typically must support assorted components, such as, by way of example, air tanks, service lines, fuel tanks, fuel and electrical lines, hydraulic lines and systems, drive trains and accessories, and/or the like.

Such vehicles may carry multiple battery modules arranged in a battery system and it is often needed to stack the battery modules vertically or horizontally in several layers due to specifics of space available for installation of battery pack. Each of the battery cells comprises battery terminals for connection to for example CCU-units, busbars, cell spacers, temperature sensors, voltage sensors and thermal insulations.

The battery cells may furthermore comprise gas venting members to allow gases produced during its operation to vent into the atmosphere to avoid rupture of the battery cells. Channeling gas venting is a complex design with many different parts and are usually arranged close to the battery terminals. A benefit of the battery module according to the present disclosure is that the arrangements of both the gas venting parts and the battery terminals are facilitated, also that the volumetric efficiency is improved, which in turn may increase the capacity of the battery module as the additional space liberated could be used to store more energy.

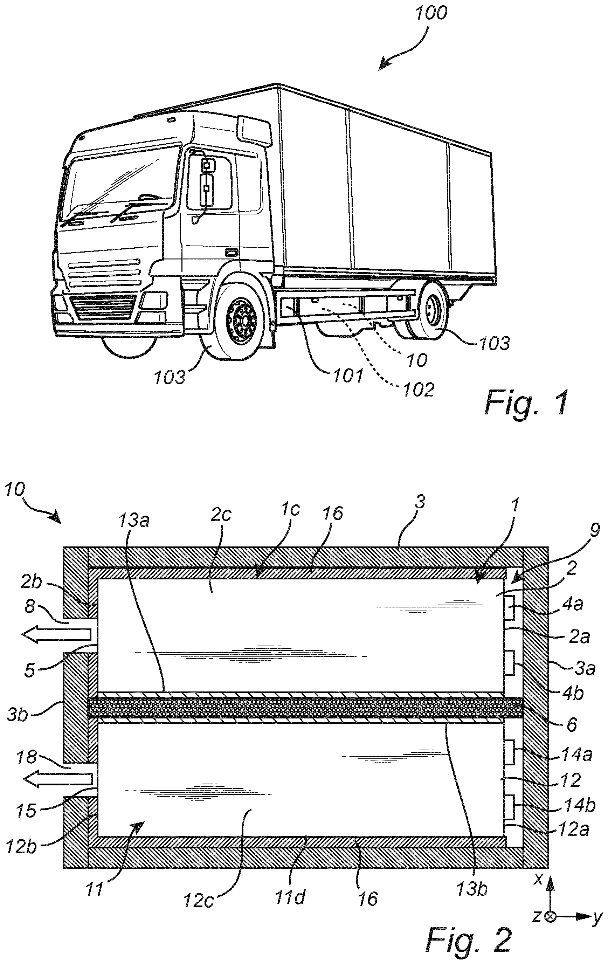

**FIG.** 1 is an exemplary vehicle 100 according to an example. The vehicle 100 illustrated in Fig. 1 is in the form of an electrified truck with an electrified propulsion. The electrified truck is powered by an electrical energy storage system comprising a battery module 10. The electrified truck 100 comprises an electrical propulsion system 101 configured to provide traction power to the vehicle 100. The electrical propulsion system 101 provides electrical power to an electrical motor 102. The electrical propulsion system comprises the battery module 10 and the electrical motor 102. The battery module 10 is connected to the electrical motor 102 to provide power to the electrical motor 102 thereby the electrical motor 102 can provide traction power to one or more ground engaging members, e.g., one or more wheels 103.

**FIG. 2** is an exemplary battery module 10 according to an example shown in a cross-sectional view. The battery module 10 comprises a battery stack 9 and the battery stack 9 comprises a first cell stack 1 and a second cell stack 11. The first and the second cell stack 1,11 are stacked in a height direction x of the battery module 10. When being installed in a vehicle, such as in Fig. 1, the height direction x of the battery module may correspond to the height direction of the vehicle.

The first and second cell stack 1,11 comprises battery cells 2,12 being stacked in the depth direction z of the battery module 10. The battery cells 2,12 according to the present disclosure may be prismatic cells, i.e., a cell whose chemistry is enclosed in a rigid casing. The rectangular shape of the prismatic cells allows for efficient stacking of multiple cells in a cell stack.

The battery stack 9 is arranged in an outer casing 3. The outer casing 3 comprises a first side wall 3a and a second side wall 3b, the first and second side walls 3a,3b of the outer casing 3 being opposing side walls. Each of the battery cells 2,12 comprises a first side wall 2a, 12a, a second side wall 2b,12b and a first main wall 2c, 12c. The first side wall 2a,12a of the respective battery cell 2,12 in each of the first and the second cell stack 1,11 faces the first side wall 3a of the outer casing 3. The second side wall 2b, 12b of the respective battery cells 2,12 in each of the first and the second cell stack 1,11 faces the second side wall 3b of the outer casing 3. As shown in Fig. 2, each of the battery cells 2,12 comprises a first and a second battery terminal 4a,4b, 14a, 14b, i.e. a respective positive and negative terminal. The first and the second battery terminals 4a,4b,14a,14b are arranged at the first side wall 2a, 12a of the respective battery cells 2,12.

Each of the battery cells 2,12 furthermore comprises a respective gas venting member 5, the gas venting members 5 are arranged at the second side wall 2b, 12b of the respective battery cells 2,12. The gas venting members 5,15 provide ventilation from each of the battery cells 2,12 of the first and the second cell stack 1,11 through the second side wall 3b of the outer casing 3. Each of the gas venting members 5,15 is connected to a respective opening 8,18 in the outer casing 3, thus allowing the gas to exit the battery cells 2,12 and the outer casing 3.

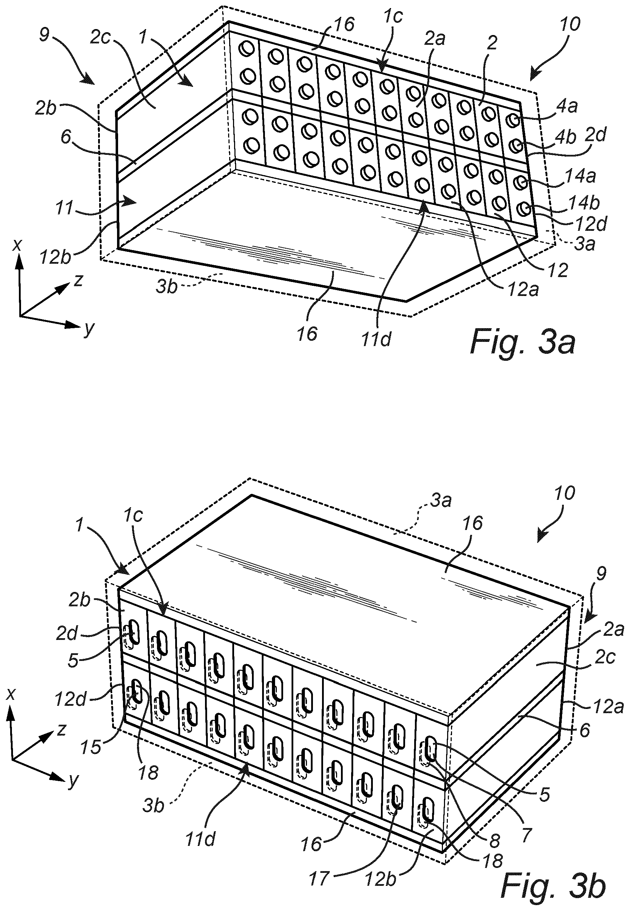

**FIG. 3a** illustrates an exemplary battery module 10 comprising a battery stack 9. The battery stack 9 comprises a first cell stack 1 and a second cell stack 11. The first and the second cell stack 1,11 are stacked in a height direction x and the first stack 1 is stacked on top of the second stack 11. The first and second cell stacks 1,11 each comprises battery cells 2,12 being stacked in a depth direction z of the battery module 10. The battery stack 9 may comprise a multiple of cell stacks corresponding to the first and second cell stacks stacked on top of each other.

The battery module 10 furthermore comprises an outer casing 3 and the battery stack 9 is arranged in the outer casing 3. The outer casing 3 comprises a first side wall 3a and a second side wall 3b, the first and second side walls 3a,3b of the outer casing 3 being opposing side walls. Fig. 3a illustrates the battery module 10 as seen from the first side wall 3a.

Each of the battery cells 2, 12 comprises a first side wall 2a,12a, a second side wall 2b, 12b, a first main wall 2c, 12c and a second main wall 2d, 12d. The battery cells 2,12 being arranged next to each other with the first main cell wall 2c, 12c of one battery cell 2,12 facing the second main wall 2d,12d of an adjacent battery cell 2,12. The first side wall 2a,12a of the respective battery cells 2,12 faces the first side wall 3a of the outer casing 3. The battery cells 2 comprises a first and a second battery terminal 4a,4b, 14a, 14b arranged at the first side wall 2a, 12a of the respective battery cells 2,12.

A thermal control barrier plate 6 is arranged between the first and the second cell stack 1,11. The thermal control barrier plate 6 may be a liquid thermal control barrier plate. Optionally, a layer of thermal interface material 13a, 13b is arranged between the thermal control barrier plate 6 and the respective first and second cell stack 1,11.

In order to provide structural support for the battery stack 9, structural or semi-structural adhesive 16 may be provided on a top side 1c of the first cell stack 1, as illustrated in Fig. 3a. Alternatively or additionally, structural or semi-structural adhesive 16 may be provided on a bottom side 11d of the second cell stack 11.

**FIG. 3b** illustrates an exemplary battery module 10 comprising a battery stack 9. The battery stack 9 comprises a first cell stack 1 and a second cell stack 11. The first and the second cell stack 1,11 are stacked in a height direction x and the first stack 1 is stacked on top of the second stack 11. The first and second cell stacks 1,11 each comprises battery cells 2,12 being stacked in a depth direction z of the battery module 10. The battery stack 9 may comprise a multiple of cell stacks corresponding to the first and second cell stacks stacked on top of each other.

The battery module 10 furthermore comprises an outer casing 3 and the battery stack 9 is arranged in the outer casing 3. The outer casing 3 comprises a first side wall 3a and a second side wall 3b, the first and second side walls 3a,3b of the outer casing 3 being opposing side walls. Fig. 3b illustrates the battery module 10 as seen from the second side wall 3b.

Each of the battery cells 2, 12 comprises a first side wall 2a,12a, a second side wall 2b, 12b, a first main wall 2c, 12c and a second main wall 2d, 12d. The battery cells 2,12 being arranged next to each other with the first main cell wall 2c, 12c of one battery cell 2,12 facing the second main wall 2d,12d of an adjacent battery cell 2,12. The second side wall 2b, 12b of the respective battery cells 2,12 faces the second side wall 3a of the outer casing 3. The battery cells 2,12 comprise a respective gas venting member 5,15, the gas venting members 5,15 being arranged at the second side wall 2b, 12b of the respective battery cells 2,12. The gas venting members 5,15 provide ventilation from each of the battery cells 2,12 of the first and second cell stack 1,11, respectively, through openings 8,18 provided in the second side wall 3b of the outer casing 3 and connected to the gas venting members 5,15, such as for example via channels connecting the gas venting members and the openings in the side wall of the outer casing. As illustrated in Fig. 3b, the gas venting members 5,15 may comprise a respective pressure relief valve 7,17 to improve control of the gas venting members 5,15. The pressure relief valve 7,17 may be set to open at a pre-determined pressure within the battery cells 2,12.

A thermal control barrier plate 6 is arranged between the first and the second cell stack 1,11. The thermal control barrier plate 6 may be a liquid thermal control barrier plate, such as a liquid cooling plate.

The battery stack 9 in Fig. 3b is provided with structural or semi-structural adhesive 16 on a top side 1c of the first cell stack 1 and on a bottom side 11d of the second cell stack 11.

### EXAMPLE LIST

Example 1: A battery module, the battery module comprising a first cell stack comprising battery cells being stacked in a depth direction of the battery module, the battery module furthermore comprising an outer casing, the first cell stack being arranged in the outer casing, the outer casing comprising a first side wall and a second side wall, the first and second side walls of the outer casing being opposing side walls, each of the battery cells comprising a first and a second side wall, a first main wall and a second main wall, the first side wall of the respective battery cell facing the first side wall of the outer casing and the second side wall of the respective battery cells facing the second side wall of the outer casing, wherein each of the battery cells comprises a first and a second battery terminal, the first and the second battery terminals being arranged at the first side wall of the respective battery cells and wherein each of the battery cells comprises a respective gas venting member, the gas venting members being arranged at the second side wall of the respective battery cells, the gas venting members providing ventilation from each of the battery cells of the first cell stack through the second side wall of the outer casing.

Example 2: The battery module of example 1, wherein the first cell stack faces a thermal control barrier plate.

Example 3: The battery module of any one of examples 1 or 2, wherein the thermal control barrier plate is a liquid thermal control barrier plate.

Example 4: The battery module of any one of examples 1 to 3, wherein a layer of thermal interface material is arranged between the thermal control barrier plate and the respective first cell stack.

Example 5: The battery module of any one of the preceding examples, wherein each of the gas venting members comprises a respective pressure relief valve.

Example 6: The battery module of any one of the preceding examples, wherein each of the gas venting members is connected to a respective opening in the outer casing.

Example 7: The battery module of any one of the preceding examples, wherein the first side wall of the outer casing is a removable side wall.

Example 8: The battery module of any one of the preceding examples, wherein the battery module comprises a battery stack, the battery stack comprising the first cell stack and a second cell stack, the first and second cell stack being stacked in a height direction of the battery module, the first and second cell stacks comprising battery cells being stacked in the depth direction of the battery module, battery stack being arranged in the outer casing, the battery cells of the second cell stack comprises a first and a second side wall, a first main wall and a second main wall, the first side wall of the respective battery cell of the second cell stack facing the first side wall of the outer casing and the second side wall of the respective battery cells of the second cell stack facing the second side wall of the outer casing, wherein each of the battery cells in the second cell stack comprises a first and a second battery terminal, the first and the second battery terminals being arranged at the first side wall of the respective battery cells and wherein each of the battery cells in the second cell stack comprises a respective gas venting member, the gas venting members being arranged at the second side wall of the respective battery cells, the gas venting members providing ventilation from each of the battery cells in the second cell stack through the second side wall of the outer casing

Example 9: The battery module of example 8, wherein a thermal control barrier plate is arranged between the first and the second cell stack.

Example 10: The battery module of example 8 or 9, wherein the thermal control barrier plate is a liquid thermal control barrier plate.

Example 11: The battery module of example 9 or 10, wherein a layer of thermal interface material is arranged between the thermal control barrier plate and the respective first and second cell stack.

Example 12: The battery module of any one of examples 8 to 11, wherein the each of the gas venting members of the first and/or second cell stack comprises a respective pressure relief valve.

Example 13: The battery module of any one of examples 8 to 12 wherein each of the gas venting members of the second cell stack is connected to a respective opening in the outer casing.

Example 14: The battery module of any one of examples 8 to 13, wherein the first cell stack is a top cell stack, and the second cell stack is a bottom cell stack.

Example 15: The battery module of any one of examples 8 to 14, wherein the first side wall of the outer casing is a removable side wall common for the first and the second cell stack.

Example 16: The battery module of any one of examples 7 to 15, wherein structural or semi-structural adhesive is provided on a top side of the first cell stack.

Example 17: The battery module of any one of examples 8 to 16, wherein structural adhesive is provided on a bottom side of the second cell stack.

Example 18: An electrical propulsion system comprising an electric motor and a battery module according to any one of the preceding examples, wherein the electric motor is configured to receive power from the battery module.

Example 19: A vehicle comprising a battery module according to any one of examples 1 to 17 or an electrical propulsion system according to example 18.

Example 20: A stationary energy storing system comprising a battery module according to any one of examples 1 to 17.

Example 21: A marine vessel comprising a battery module according to any one of examples 1 to 17.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery module (10), the battery module (10) comprising a first cell stack (1) comprising battery cells (2) being stacked in a depth direction (z) of the battery module (10), the battery module (10) furthermore comprising an outer casing (3), the first cell stack (1) being arranged in the outer casing (3), the outer casing (3) comprising a first side wall (3a) and a second side wall (3b), the first and second side walls (3a,3b) of the outer casing (3) being opposing side walls, each of the battery cells (2) comprising a first and a second side wall (2a,2b), a first main wall (2c) and a second main wall (2d), the first side wall (2a) of the respective battery cell (2) facing the first side wall (3a) of the outer casing (3) and the second side wall (2b) of the respective battery cells (2) facing the second side wall (3b) of the outer casing (3), wherein each of the battery cells (2) comprises a first and a second battery terminal (4a,4b), the first and the second battery terminals (4a,4b) being arranged at the first side wall (2a) of the respective battery cells (2) and wherein each of the battery cells (2) comprises a respective gas venting member (5), the gas venting members (5) being arranged at the second side wall (2b) of the respective battery cells (2), the gas venting members (5) providing ventilation from each of the battery cells (2) of the first cell stack (1) through the second side wall (3b) of the outer casing (3).

2. The battery module (10) according to claim 1, wherein the first cell stack (1) faces a thermal control barrier plate (6).

3. The battery module (10) according to claim 1 or 2, wherein the thermal control barrier plate (6) is a liquid thermal control barrier plate.

4. The battery module (10) according to any one of the preceding claims, wherein each of the gas venting members (5) comprises a respective pressure relief valve (7).

5. The battery module (10) according to any one of the preceding claims, wherein the battery module (10) comprises a battery stack (9), the battery stack (9) comprising the first cell stack (1) and a second cell stack (11), the first and second cell stack (1,11) being stacked in a height direction (x) of the battery module (10), the first and second cell stack (1,11) comprising battery cells (12) being stacked in the depth direction (z) of the battery module (10), battery stack (9) being arranged in the outer casing (3), the battery cells (12) of the second cell stack (12) comprises a first and a second side wall (12a, 12b), a first main wall (12c) and a second main wall (12d), the first side wall (12a) of the respective battery cell (12) of the second cell stack (11) facing the first side wall (3a) of the outer casing (3) and the second side wall (12b) of the respective battery cells (12) of the second cell stack (11) facing the second side wall (3b) of the outer casing (3), wherein each of the battery cells (12) in the second cell stack (11) comprises a first and a second battery terminal (14a, 14b), the first and the second battery terminals (14a,14b) being arranged at the first side wall (12a) of the respective battery cells (12) and wherein each of the battery cells (12) in the second cell stack (11) comprises a respective gas venting member (15), the gas venting members (15) being arranged at the second side wall (12b) of the respective battery cells (12), the gas venting members (15) providing ventilation from each of the battery cells (12) in the second cell stack (11) through the second side wall (3b) of the outer casing (3).

6. The battery module (10) according to claim 5, wherein a thermal control barrier plate (6) is arranged between the first and the second cell stack (1,11).

7. The battery module (10) according to claim 5 or 6, wherein the thermal control barrier plate (6) is a liquid thermal control barrier plate.

8. The battery module (1) according to claim 6 or 7, wherein a layer of thermal interface material (13a, 13b) is arranged between the thermal control barrier plate (6) and the respective first and second cell stack (1,11).

9. The battery module (10) according to any one of claims 5 to 8, wherein each of the gas venting members (15) of the first and/or second cell stack (1,11) comprises a respective pressure relief valve (7,17).

10. The battery module (10) according to any one of claims 5 to 9, wherein each of the gas venting members (15) of the second cell stack (11) is connected to a respective opening (18) in the outer casing (3).

11. The battery module (10) according to any one of claims 5 to 10, wherein the first cell stack (1) is a top cell stack, and the second cell stack (11) is a bottom cell stack.

12. An electrical propulsion system comprising an electric motor (101) and a battery module (10) according to any one of the preceding claims, wherein the electric motor (101) is configured to receive power from the battery module (10).

13. A vehicle (100) comprising a battery module (10) according to any one of claims 1 to 11 or an electrical propulsion system according to claim 12.

14. A stationary energy storing system comprising a battery module (10) according to any one of claims 1 to 11.

15. A marine vessel comprising a battery module (10) according to any one of claims 1 to 11.
